# EUROPEAN PATENT SPECIFICATION

(11) **EP 0 655 203 B1**
(45) Date of publication and mention of the grant of the patent: **06.10.1999**
(21) Application number: 94118516.7
(22) Date of filing: 24.11.1994
(51) Int. Cl.: A23K 1/16, A23K 1/18

(54) **New feed for cultured fish**
Neues Fischfutter
Nouvelle nourriture pour poissons

(30) Priority: 25.11.1993 ES 9302480
(43) Date of publication of application: 31.05.1995
(73) Proprietor: ZOSTER, S.A., E-30588 Zeneta (Murcia) (ES)
(72) Inventor: Foguet, Rafael, E-08022 Barcelona (ES); Borrego, Francisco, E-30150 La Alberca (Murcia) (ES); Campos, Juan, E-30720 Stgo. de la Ribera (Murcia) (ES); Madrid, Juan A., E-30151 Sto. Angel (Murcia) (ES); Zamora, Salvador, Murcia (ES)
(74) Representative: Kinzebach, Werner, Dr.

(56) References cited:
- EP-A- 0 500 977
- GB-A- 1 568 875
- US-A- 4 001 453
- US-A- 5 139 791
- PATENT ABSTRACTS OF JAPAN vol. 16, no. 33 (C-0905) 28 January 1992 & JP-A-03 244 351 (MERCIAN CORP) 31 October 1991

## Description

The present invention relates to a new feed for cultured fish characterized in that the feed provided to fish contains neohesperidin dihydrochalcone.

The incorporation of neohesperidin dihydrochalcone into feed improves acceptability to the fish and this leads to a higher intake.

Reduction of fish availability due to extensive fishing has lead to the development of the aquaculture industry, which is devoted to produce fish and other aquatic species in controlled bodies of water.

One of the main problems associated with the development of aquaculture is to provide an adequate feed which meets all the nutritional needs of each particular cultured fish. However, the successful use of a commercial fish feed is also largely related to its palatability characteristics, which depend upon its chemical composition.

As is typical of vertebrates, fish use their oral taste buds to determine the palatability of feed and, consequently, the choice for food. Accordingly, the gustatory system of fish is sensitive to a variety of chemical compounds. In effect, several species of fish have been shown to be responsive to various aminoacids, betain, quaternary ammonium compounds, nucleotides, organic acids and alcohols, amines and amides, urea, taurine, dimethylthetin, indole, skatol, histamine, D-ribose, D-glucose, D-fructose, sucrose and ractopamine (*Jones KA: "Journal of Fish Biology" (1989) 34, 149-160; Jones KA: "Journal of Fish Biology" (1990) 37, 413-423; Anderson DB & Veenhuizen EL: USA Patent No. 5,216,029, 1-6-93)*.

Neohesperidin dihydrochalcone is an intense sweetener which is prepared by procedures described in the prior art (*Horowitz RM & Gentili B. In: "Alternative Sweeteners", 2nd edition, L.O.Nabors & R.C. Gelardi, Ed., pp.97-116, 1991, Marcel Dekker Inc., N.Y.*) and has the following structural formula:

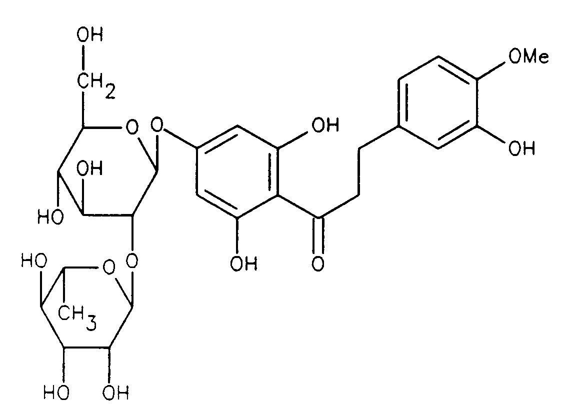

At low concentrations it is several hundreds of times sweeter than sucrose (*Dubois GE et al: "Journal of Medicinal Chemistry" (1981) 24, 408-428; Crosby GA et al: "New Sweeteners". In: CRC Handbook of Food Additives, T.E.Furia, Ed., Boca Ratón, CA, CRC Press 1980, Vol.1, 203-216*). It has a pleasant sweet taste and lacks any bitter or metallic aftertaste *(Schiffman SS et al: "Physiology and Behaviour" (1970) 23, 1-9)*.

The relative intense sweetness of neohesperidin dihydrochalcone like that of other sweeteners decreases with increasing concentrations. Thus, neohesperidin dihydrochalcone is about 1800 times sweeter than sucrose at concentrations that are near the threshold of organoleptic perception *(Horowitz RM & Genitili B. In: "Alternative Sweeteners", 2nd edition, L.O.Nabors & R.C. Gelardi, Ed., pp.97-116, 1991, Marcel Dekker Inc., NY)*.

As concentration increases, the relative sweetness of neohesperidin dihydrochalcone decreases. Moreover, other authors reported a higher sweetness: 1000 and 600 times than that of sugar at sucrose concentrations of 5 and 8.5% (*Krbechek L et al: "Journal of Agricultural Food Chemistry" (1968) 16, 108-112; Inglett GE et al: "Journal of Food Science" (1969) 34, 101-103; Dubois GE et al: "Science" (1977) 195, 397-399; Schiffman SS: "Physiology and Behaviour" (1979) 23, 1-9*).

The time/intesity profile of neohesperidin dihydrochalcone is characterized by a slightly delayed onset with a rather long duration of sweetness perception.

The present invention relates to a novel and surprising use of neohesperidin dihydrochalcone as a substance that improves the palatability of fish feed in aquaculture. So far, such effects have been obtained using chemical compounds -as detailed above- which share some of the following features: a) low molecular weight, b) nitrogen-containing molecules, c) non-volatile, water-soluble molecules, d) compounds naturally occurring in fish and other animals or plants, e.g. betain and aminoacids, which are the substances with highest known efficacy and naturally occur in molluscs, crustaceous, grubs and other prey organisms for fish. In the prior art, the common practice has been to use aminoacids and other related low molecular weight substances.

Patent Abstracts of Japan, Vol. 16, No. 33 (C-0905), 28.01.1992, discloses the use of aspartame in fish feed to exhibit attracting and feed ingestion-stimulating effect and to improve growth. GB-A-1 568 875 and US-A-4 001 453 disclose the use of neohesperidine dihydrochalcone in animal feed, and EP-A-0 500 977 discloses body and mouthfeel potentiated foods containing neohesperidine dihydrochalcone.

It has been discovered that the high intensity sweetener neohesperidin dihydrochalcone remarkably improves the palatability of feed for several fish species, including river and marine-species, by mixing with different types of feed.

Neohesperidin dihydrochalcone is a synthetic high molecular weight substance, which does not contain nitrogen in its molecule, not known to occur in any animal or plant species, and lacks the features which characterize the palatability-improving substances for fish described in the prior art, and its use with feed can be regarded as an absolute novelty that provides important advantages.

Neohesperidin dihydrochalcone improves preference and, consequently, stimulates appetite and feed intake, in particular when incorporated into artificial feed used in aquaculture at concentrations from 0.5 to 200 ppm, preferably from 5 to 100 ppm.

The present invention is illustrated by the following non-limiting examples. All parts and percentages are by weight unless otherwise indicated.

### EXAMPLE 1: Increase in feed intake in sea-bass (Dicentrarchus labrax) by neohesperidin dihydrochalcone

At the beginning of the test, a stock group of sea-bass *(Dicentrarchus labrax)* was fed with control diet (protein: 48.0%; fat: 13%; carbohydrates: 17%; ash: 11%; fiber: 2%; moisture: 9%) for 10 days. After this acclimatization period and a subsequent one-day starvation, 50 sea-bass were fed with control diet and 50 with test feed containing 20 ppm of neohesperidin dihydrochalcone (the inclusion of neohesperidin dihydrochalcone in the formulation did not affect the nutritional composition of the control diet). Fish from both groups were fed *ad libitum* twice daily for 25 days. Total feed intake was 11.5% higher in test group than in control group.

### EXAMPLE 2: Gustatory preference of rainbow trout (Oncorhynchus mykiss) for neohesperidin dihydrochalcone

Rainbow trout *(Oncorhynchus mykiss)*, as active sight feeders, attack 4.0-4.5 mm fabric pellets dropped into their aquaria. The pellets seized are held in the mouth regardless of whether they are flavoured or not. However, once the pellet is inside the trout's mouth, it will be discriminated according to its degree of palatability. Unflavoured pellets and those flavoured with distasteful substance are expectorated immediately. In contrast, those flavoured with agreeable substances are held for a period of time proportional to the appeal of the flavouring. Highly palatable pellets are swallowed quickly.

This experiment was carried out with 48 rainbow trout with an initial average weight of 140 g. Fish were distributed in 8 groups placed in 200 l tanks with an initial load of 4 kg/m³. Rainbow trout discriminated between pellets soaked in distilled water (Control) and those carrying neohesperidin dihydrochalcone solutions, ranging from 5 to 300 ppm. The pellets soaked in distilled water were consistenly rejected within a few seconds (mean value= 2.18 sec) while all the neohesperidin dihydrochalcone flavaoured pellets were held -and eventually swallowed- for average retention times of up to 5.6 sec.

### EXAMPLE 3: Preference determination for feed containing neohesperidin dihydrochalcone using two computerized self-demand feeders in sea-bass (Dicentrarchus labrax)

Sea-bass are able to learn to operate a dry-feed deliverance trigger. Using this capability, taste preference has been determined by equipping the culture tanks with two feeders (A and B) containing control feed and test feed (containing 20 ppm of nehesperidin dihydrochalcone). Feed composition was identical to that described in Example 1. The inclusion of neohesperidin dihydrochalcone in the feed did not affect its nutritional composition.
Three groups of sea-bass -10 animals per group- with initial weight average of 150 g were trained for 21 days to obtain their feed from two computerized self-demand feeders (A and B) which release a small amount of feed when the fish activate their corresponding triggers through physical contact. After this training period, during which both feeders contained control feed, test feed containing 20 ppm of neohesperidin dihydrochalcone was incorporated into dispenser A, while dispenser B released control feed during the whole experimental period. Test duration lasted for 15 days. Feed intake from dispenser A increased by 49%, while intake from dispenser B remained virtually constant (decreased by 4%).

### EXAMPLE 4: Preference determination for feed containing neohesperidin dihydrochalcone using two computerized self-demand feeders in rainbow trout (Oncorhyncus mikiss)

Six groups of trout -6 animals per group- with initial weight of 300-400 g were trained for 20 days to obtain their feed from two computerized self-demand feeders (A and B) which released a small amount of pelleted feed when the fish activated their corresponding triggers through physical contact. Once the intake from both dispensers containing control feed (protein: 45%; fat: 10%; carbohydrates: 22%; ash: 10%; fiber: 3%; moisture: 10%) reached a constant value, fish were subjected to the following feed schedule:
- day 1 to day 25: both dispensers A and B released control feed.
- day 25 to day 45: dispenser A released test feed containing 20 ppm of neohesperidin dihydrochalcone, and dispenser B released control feed.
- day 46 to day 63: dispenser A released control feed and dispenser B released test feed.

Trouts were able to differentiate between control and test feed, as demonstrated by the fact that the intake of test feed drammatically increased 2-3 days after it was incorporated into the dispenser. In terms of percentages, intake of feed containing neohesperidin dihydrochalcone increased by 106% when this feed was in dispenser A (days 25 to 45) and 62% in dispenser B.

## Claims

1. The use of neohesperidine dihydrochalcone as an additive to the feed for cultured fish.

2. The use according to claim 1 at concentrations from 0.5 to 200 ppm.

## Patentansprüche

1. Verwendung von Neohesperidin-Dihydrochalkon als Futterzusatz für Kulturfische.

2. Verwendung nach Anspruch 1 in Konzentrationen von 0,5 bis 200 ppm.

## Revendications

1. Utilisation de néohespéridine dihydrochalcone en tant qu'additif à de la nourriture pour poissons d'élevage.

2. Utilisation selon la revendication 1 à des concentrations de 0,5 à 200 ppm.
